(19) Europäisches Patentamt
European Patent Office
Office européen des brevets

(11) **EP 1 542 102 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
***G05B 13/04*** *(2006.01)*

(21) Anmeldenummer: **04028204.8**

(22) Anmeldetag: **27.11.2004**

(54) **Verfahren und Vorrichtung zur suboptimalen Regelung mittels einer Suchstrategie und Verfahren und Vorrichtung zur Gaszerlegung, insbesondere zur Tieftemperatur-Luftzerlegung**

Method and device for suboptimal control by means of a search strategy and method and device for gas separation ,in particular for cryogenic air separation

Procédé et dispositif de commande sous-optimal au moyen d'une stratégie de recherche et procédé et dispositif de séparation d'air, notamment de séparation d'air cryogénique

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **10.12.2003 EP 03028368**

(43) Veröffentlichungstag der Anmeldung:
**15.06.2005 Patentblatt 2005/24**

(73) Patentinhaber: **Linde Aktiengesellschaft
80807 München (DE)**

(72) Erfinder: **Ewert, Ulrich
83673 Bichl (DE)**

(74) Vertreter: **Imhof, Dietmar
LINDE AG
Zentrale Patentabteilung
82049 Höllriegelskreuth (DE)**

(56) Entgegenhaltungen:
**US-A- 6 056 781          US-A- 6 064 916
US-A1- 2002 177 909**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Regelung gemäß den Patentansprüchen 1 beziehungsweise 10.

Aus der US-A-6056781 ist ein Verfahren gemäß dem Oberbegriff des Patentanspruchs 1 bekannt.

Neben der Regelgröße, der Stellgröße und dem zwischen ihnen mathematisch vermittelnden Modell ("erstes Modell") existiert bei dem Verfahren eine Störgröße, die auf im Wesentlichen bekannte Weise ("zweites Modell") auf die Regelgröße einwirkt.

Die Begriffe "Regelgröße", "Stellgröße" und "Störgröße" werden hier in einer verallgemeinerten Bedeutung verwendet. Sie können nicht nur einen einzigen Parameter beschreiben, sondern auch jeweils einen Satz zweier oder mehrerer solcher Parameter, beispielsweise physikalischer Parameter. In der Praxis genügt häufig die Berücksichtigung genau eines Parameters bei allen drei Größen; die Erfindung ist jedoch ohne Weiteres auf Systeme anwendbar, bei denen die Regelgröße, die Stellgröße und/oder die Störgröße durch mehr als einen Parameter gebildet wird.

Der im Rahmen des Regelverfahrens ermittelte Wert der Stellgröße kann entweder unmittelbar an eine mechanische Stelleinrichtung übergeben werden, oder in Form eines analogen oder digitalen Signals als Regelgröße an ein weiteres Regelsystem übergeben werden, das seinerseits weitere physikalische Parameter einstellt, um den entsprechenden Wert der Stellgröße im obigen Sinne zu erreichen.

Über die Störgröße liegen - mindestens zeitweise - Informationen über ihren vermuteten zukünftigen Verlauf vor. In der Praxis können nicht alle Störungen in ihrem zeitlichen Verlauf vorhergesagt werden. Diese Information über die Zukunft ist häufig fehlerhaft oder unvollständig. Für Zeiten oder Zeitabschnitte, in denen solche Informationen vollständig fehlen, wird angenommen, dass sich die Störgröße nicht ändert; in diesem Fall weist die "Vorhersage" im Sinne der Erfindung dann einen konstanten Verlauf auf.

Daneben weist das System einen Satz von Randbedingungen auf, beispielsweise für einen erlaubten Wertebereich für die Regelgröße, eine Begrenzung und eine maximale Verstellgeschwindigkeit der Stellgröße und Ähnliches.

Klassische Regelstrategien und bekannte modellgestützte Verfahren (model predictive control - MPC) berücksichtigen Informationen über in der Zukunft zu erwartende Ereignisse außerhalb des Systems, wie sie die Vorhersage der Störgröße darstellt, in der Regel nicht.

Die Erfindung geht auf den Grundgedanken zurück, diese Informationen für die Regelung des Systems auszunutzen, um eine besonders vorteilhaften Betrieb des technischen Systems zu ermöglichen.

Zunächst handelt es sich dabei um ein Optimierungsproblem, in dem zusätzlich zu den über Vergangenheit und Gegenwart vorliegenden Informationen auch die Vorhersage der Störgröße für die Zukunft eingeht. Hierfür können grundsätzlich Gleichungen aufgestellt und numerisch gelöst werden. Der Rechenaufwand hierfür wird jedoch sehr groß; außerdem wird das Verhalten des Systems unter Umständen instabil und für den Techniker intransparent.

Im Rahmen der Erfindung hat sich herausgestellt, dass ein, im streng mathematischem Sinne, "optimaler" Verlauf von Regel- und/oder Stellgröße bei vielen technischen Systemen nicht notwendig ist. Im Gegenteil, eine strenge Optimierung führt zu häufigen Änderungen im Betrieb, die an sich unerwünscht sind. Daher wird bei der Erfindung bewusst nur ein suboptimaler Verlauf der Regelgröße angestrebt. Es wird nicht der optimale Wert der Stellgröße gesucht, sondern nur irgendein akzeptabler zeitlicher Verlauf, der zum Beispiel einen Satz von vorgegebenen Randbedingungen nicht verletzt.

Für die Ermittlung dieses suboptimalen zukünftigen Verlaufs der Regelgröße wird nun eine Suchstrategie eingesetzt, bei der vereinfachte Annahmen über die Möglichkeiten der Veränderung der Regelgröße vorgegeben werden. Diese bestehen in einem endlichen Satz von diskreten Änderungsmöglichkeiten, wobei jedem Element dieses Satzes (also jeder Änderungsmöglichkeit) ein unterschiedlicher Prioritätswert zugeordnet ist. Diese Änderungsmöglichkeiten und ihre Prioritätswerte sind in der Regel konstant; grundsätzlich ist das erfindungsgemäße Verfahren aber auch auf zeitlich veränderliche Parameter dieser Art anwendbar.

Bei eindimensionaler Stellgröße werden die Änderungsmöglichkeiten im einfachsten Fall durch drei Werte gebildet, zum Beispiel durch

- eine Erhöhung A+ der Stellgröße pro Zeiteinheit,
- eine Verminderung $\Delta$- der Stellgröße pro Zeiteinheit (z. B. $\Delta$- = - $\Delta$+) und
- den Wert Null (konstante Stellgröße).

Die Prioritätswerte werden beispielsweise im Rahmen der technischen Möglichkeiten für Notmaßnahmen bestimmt. Solche Notmaßnahmen werden eingesetzt, wenn im Rahmen der Verwendung der Änderungsmöglichkeiten eine erlaubte Grenze der Regelgröße überschritten zu werden droht. Ist zum Beispiel die beim Erreichen der oberen Grenze zu treffende Notmaßnahme weniger kostenträchtig als die bei drohender Verletzung der unteren Grenze einzusetzende, erhält die Erhöhung A+ eine höhere Priorität als die Verminderung $\Delta$-. Die Veränderung 0 besitzt die niedrigste Priorität. Dies kann folgendermaßen tabellarisch beschrieben werden:

| Änderungsmöglichkeit | Prioritätswert |
|---|---|
| $\Delta+$ | 2 |
| $\Delta-$ | 1 |
| 0 | 0 |

(Dieses Beispiel betrifft eine eindimensionale Regelgröße, kann aber ohne Weiteres auf mehrdimensionale Größen übertragen werden, da die Priorisierung in jedem Fall eine Rückführung auf eine zweispaltige Tabelle im obigen Sinne ermöglicht.)

Die vereinfachte Beschreibung der Änderungsmöglichkeiten ermöglicht nun den Einsatz einer Suchstrategie. Diese ermittelt ausgehend von einem Startzeitpunkt $t_0$, der in der Regel gleich der aktuellen Echtzeit ist, den zukünftigen Verlauf der Stellgröße bis zu einem späteren Zeitpunkt $t_n$, dem Prädiktionshorizont. Bei dieser Suche werden die zum Zeitpunkt $t_0$ verfügbaren Informationen über den Verlauf der Störgröße im Zeitraum $t_0$ bis $t_n$ berücksichtigt.

Für die tatsächliche Regelung berücksichtigt wird der Anfangswert des ermittelten zukünftigen zeitlichen Verlaufs der Regelgröße. Dieser wird als digitales oder analoges Signal ausgegeben beziehungsweise in dem technischen System eingestellt.

Für den nächsten Echtzeitpunkt wird die gesamte Suchstrategie wiederholt. Hierbei können die aktuellen Messwerte der Stell- und Regelgröße und eine aktualisierte Vorhersage für den zukünftigen zeitlichen Verlauf der Störgröße eingehen. Grundsätzlich kann bei der neuerlichen Anwendung der Suchstrategie das Ergebnis des für den vorigen Echtzeitpunkt ermittelten zukünftigen Verlaufs der Regelgröße berücksichtigt werden; vorzugsweise wird die Suchstrategie aber völlig neu bis zum neuen Prädiktionshorizont durchgeführt, allein auf der Basis der aktuellen Messwerte und der aktuellen Vorhersage der Störgröße. Im Allgemeinen wird der zeitliche Abstand zwischen Echtzeitpunkt und Prädiktionshorizont konstant gehalten; grundsätzlich ist es jedoch im Rahmen der Erfindung möglich, diesen Abstand zu variieren.

Bei der Durchführung der Suchstrategie wird das Intervall zwischen dem gegenwärtigen Zeitpunkt $t_0$ und dem Prädiktionszeitpunkt $t_n$ in diskrete, insbesondere äquidistante, Zeitschritte $[t_0, t_1]$, $[t_1, t_2]$ bis $[t_{n-1}, t_n]$ unterteilt; für jeden Zwischenzeitpunkt $t_i$ (i = 1, ..., n) wird ein Wert für die Regelgröße und die Stellgröße ermittelt. Damit ergibt sich ein vorhergesagter Verlauf für diese Größen. Für die aktuelle Einstellung der Regelgröße wird zwar in der Regel nur der erste Wert dieser Vorhersage verwendet. Jedoch stellt der gesamte zukünftige Verlauf von Stell- und/oder Regelgröße eine wertvolle Information dar und kann zu diesem Zweck grafisch oder numerisch ausgegeben werden. Dies ist insbesondere dann vorteilhaft, wenn das Bedienungspersonal oder weitere Regeleinrichtungen den zukünftigen Verlauf beeinflussen kann. Sagt das Verfahren z. B. eine Grenzwertverletzung voraus, die aufgrund von physikalischen Begrenzungen des Systems nicht vermeidbar ist, so kann über die Bildung eines Alarms das Bedienpersonal informiert werden, das dann geeignete Maßnahmen einleitet.

In vielen Fällen kann das technische System gewünschte Änderungen der Regelgröße nicht sofort umsetzen, sondern benötigt dafür eine gewisse Zeit. Dieses Verhalten wird mit einem Modell für das Zeitverhalten der Änderung der Regelgröße beschrieben, die im Rahmen der Erfindung in der Suchstrategie berücksichtigt werden kann.

Sollte eine Messung der Störgröße nicht verfügbar sein oder die Messung ungenau sein, so erlaubt das Verfahren auch die Verwendung eines Schätzwertes für die Störgröße bzw. den Messfehler.

Das technische System kann zum Beispiel durch eine Gasversorgungseinrichtung mit einer Gaszerlegung, insbesondere einer Tieftemperatur-Luftzerlegung gebildet werden. Im einfachsten Fall von eindimensionalen Größen wird die Stellgröße zum Beispiel durch den Mengenfluss des in der Gaszerlegung erzeugten Produktfluids, die Regelgröße durch den Druck in einem Reservoir des Produktfluids und die Störgröße durch Schwankungen im Verbrauch des Produktfluids gebildet werden. Das Reservoir kann beispielsweise durch eine Druckleitung (zum Beispiel ein Pipeline-System) oder durch einen dezidierten Druckspeicher oder durch beides gebildet werden.

Die Erfindung sowie weitere Einzelheiten der Erfindung werden im Folgenden anhand eines Ausführungsbeispiels näher erläutert, das sich auf die Regelung der Produktionsmenge einer Luftzerlegungsanlage, insbesondere einer Tieftemperatur-Luftzerlegungsanlage bezieht.

Zu den schwierigen Aufgaben der Luftzerleger-Automatisierung gehören Regelungen, die Produktionsraten der Anlagen an einen aktuellen Verbrauch anpassen bzw. die Anlagen so verfahren, dass ein vorausgesagter Verlauf des Verbrauchs berücksichtigt wird (Pipeline-Folgeregelung). Das im Folgenden beschriebene Verfahren basiert auf einem numerischen Suchalgorithmus, der einen suboptimalen Verlauf der Produktionsraten prädiziert. Suboptimal ist in diesem Zusammenhang dahingehend zu verstehen, dass Abblasen von Produkten bzw. deren Versorgung über Notversorgungssysteme möglichst vermieden wird, aber keine weitere Optimieru ng, z. B. im Sinne eines möglichst geringen Energieverbrauchs der Produktionsanlage stattfindet.

Theoretischer Hintergrund

Aufgabenstellung

Ein Luftzerleger liefert ein gasförmiges Produkt mit dem Mengenstrom $F_I$ ("Regelgröße") in eine Pipeline. An der Pipeline hängen Verbraucher, die in der Summe die Menge $F_O$ abnehmen. Der Druck in der Pipeline ("Stellgröße") zu einem zukünftigen Zeitpunkt $t_n$ berechnet sich wie folgt:

$$P_{p(tn)} = \int_{t0}^{tn} \frac{1}{T_p} \left( F_{Ip(t)} - F_{Op(t)} - F_{err} \right) dt + P_{g(t0)}$$

Die Symbole sind verwendet wie folgt:

$P_g$      gemessener Druck in der Pipeline
$P_p$      prädizierter Druck in der Pipeline
$F_{Ip}$      prädizierte Produktionsmenge der Anlage
$F_{Op}$      prädizierter Gesamtverbrauch
$F_{err}$      systematischer Fehler in den Mengenmessungen
$T_p$      Zeitkonstante des Pipelinedrucks
$t$      Zeit
$t_0$      gegenwärtiger Zeitpunkt
$t_n$      zukünftiger Zeitpunkt

Der Betrieb der Anlage unterliegt Beschränkungen, die sich als folgende Ungleichungsnebenbedingungen formulieren lassen, d. h. die Produktionsmengen und die Verstellgeschwindigkeit der Anlage sind beschränkt:

$$F_{I\min} \leq F_I \leq F_{I\max}$$

$$F_{I\min}^{\circ} \leq \frac{F_I}{dt} \leq F_{I\max}^{\circ}$$

Ziel des Betriebs der Anlage ist es, den Druck in der Pipeline innerhalb vorgegebener Grenzen zu halten:

$$P_{\min} \leq P \leq P_{\max}$$

Die zukünftigen Verbrauchsmengen $F_{Op(t)}$ liegen als prädizierte Zeitreihe ("Vorhersage für den zukünftigen zeitlichen Verlauf der Störgröße") vor, die Prädiktion muss zu jedem beliebigen Zeitpunkt korrigierbar sein. Nimmt man an, der systematische Fehler in der Mengenmessung sei annähernd konstant, so lässt sich $F_{err}$ wie folgt schätzen:

$$F_{err} = \left( \int_{tm}^{t0} \frac{1}{T_p} \left( F_{Ig(t)} - F_{Og(t)} \right) dt + P_{g(tm)} - P_{g(t0)} \right) * \frac{T_p}{(t0 - tm)}$$

Die Symbole sind verwendet wie folgt:

$P_g$      gemessener Druck in der Pipeline
$F_{Ig}$      gemessene Produktionsmenge der Anlage
$F_{Og}$      gemessener Gesamtverbrauch
$F_{err}$      systematischer Fehler in den Mengenmessungen

$T_p$    Zeitkonstante des Pipelinedrucks
t    Zeit
$t_0$    gegenwärtiger Zeitpunkt
$t_m$    Zeitpunkt aus der Vergangenheit

Weiterhin ist die Charakteristik gegeben, mit der die Anlage in ihrer Produktionsmenge verstellt werden kann. Dies ist normalerweise aufgrund des Lastwechselprogramms ALC eine Verzögerung 1. Ordnung mit der folgenden Differentialgleichung:

$$F_{I(t)} + T_{ALC}\left(\frac{F_s}{dt}\right)\frac{F_{I(t)}}{dt} = f_{ALC}\left(F_{S(t)}\right)$$

Die Symbole sind verwendet wie folgt:

$F_I$    Produktionsmenge der Anlage
$F_S$    Sollmenge des Lastwechselprogramms
$f_{ALC}(F_S)$    ALC-Funktion, in der Regel Polynom 1. Ordnung
$T_{ALC(Fs/dt)}$    Zeitkonstante des ALC-Programms

Die Zeitkonstante des ALC-Programms $T_{1(Fs/dt)}$ kann von der Änderungsrichtung abhängig sein:

$$T_{ALC}\left(\frac{F_s}{dt}\right) = T_{ALC1}, \frac{F_S}{dt} \geq 0$$

$$T_{ALC}\left(\frac{F_s}{dt}\right) = T_{ALC2}, \frac{F_S}{dt} < 0$$

Gesucht ist ein zukünftiger zeitlicher Verlauf von $F_S$ mit dem es möglich ist, den Pipeline-Druck innerhalb der vorgegebenen Grenzen zu halten.

Überführen in zeitdiskrete Form

Zur Lösung des oben angegebenen Problems werden die Gleichungen zunächst einmal in die zeitdiskrete Form überführt (Euler-Integration).

Pipelinedruck:

$$P_{p(n)} = \sum_{i=0}^{i=n-1} \frac{\Delta t}{T_p}\left(F_{Ip(i)} - F_{Op(i)} - F_{err}\right) + P_{g(0)}$$

$$F_{I\min} \leq F_I \leq F_{I\max}$$

$$\Delta F_{I\ \min} \leq \left(F_{I(i)} - F_{I(i-1)}\right) \leq \Delta F_{I\ \max}$$

$$P_{\min} \leq P \leq P_{\max}$$

Mengenfehler:

$$F_{err(0)} = \left( \sum_{i=m+1}^{0} \frac{\Delta t}{T_p} \left( F_{Ip(i)} - F_{Op(i)} \right) + P_{g(m)} - P_{g(0)} \right) * \frac{T_p}{-m*\Delta t}$$

ALC-Charakteristik:

$$F_{I(i+1)} = \frac{\Delta t}{T_{ALC}} \left( F'_{S(i)} - F_{I(i)} \right) + F_{I(i)}$$

$$F'_{I(i)} = a*b + F_{S(i)}$$

$$T_{ALC} = T_{ALC1}, \left( F'_{S(i)} - F_{I(i)} \right) \geq 0$$

$$T_{ALC} = T_{ALC2}, \left( F'_{S(i)} - F_{I(i)} \right) < 0$$

Die Symbole sind verwendet wie folgt:

$P_g$      gemessener Druck in der Pipeline
$P_p$      prädizierter Druck in der Pipeline
$F_{Ip}$      prädizierte Produktionsmenge der Anlage
$F_{Op}$      prädizierter Gesamtverbrauch
$F_{err}$      systematischer Fehler in den Mengenmessungen
$F_S$      Sollmenge des Lastwechselprogramms
$F'_I$      von ALC berechnete Menge
$T_p$      Zeitkonstante des Pipelinedrucks
$T_{ALC}$      Zeitkonstante des ALC Lastwechsels
$\Delta t$      Abtastzeit
$i$      Indizes der Zeitreihe
$n$      Index des Prädiktionshorizonts
$m$      Index des Bewertungshorizonts, m ist negativ
$0$      gegenwärtiger Zeitpunkt

Optimierungsproblem

Gesucht ist eine Zeitreihe $F_{S(i)}$, mit der das folgende Gütekriterium minimal wird:

$$J = \sum_{i=1}^{n} \left[ P_{p(i)} - P_S \right]^2$$

Die Symbole sind verwendet wie folgt:

$P_S$      Drucksollwert
$P_p$      prädizierter Druck in der Pipeline
$i$      Indizes der Zeitreihe
$n$      Prädiktionshorizont

Die obigen Ungleichungsnebenbedingungen sind Hard-Constraints bezüglich der minimalen/maximalen Mengen und Mengengradienten (dies sind harte physikalische Grenzen) und Soft-Constraints bezüglich des Pipeline-Drucks. Das Unter- bzw. Überschreitung des Drucks wird, falls es die Regelung nicht verhindern kann, durch Notversorgung oder Abblasen verhindert.

Der Index n wird als Prädiktionshorizont bezeichnet. Der Index m hat die Funktion eines Filterhorizonts oder Bewertungshorizonts.

Problem: Bei der Anwendung üblicher Optimierungsverfahren müssen sehr viele Parameter optimiert werden, d. h. die Werte der Zeitreihe $F_{S(i)}$. Einen Ausweg bietet die folgende Suchstrategie, die eine suboptimale, für die gewünschte Anwendung ausreichende Lösung liefert.

Suchstrategie

Zur Lösung des Problems der Druckhaltung in der Pipeline ist es eigentlich nicht notwendig, eine optimale Lösung für die Zeitreihe $F_{S(i)}$ zu finden. Es reicht aus, irgend eine Zeitreihe zu finden, mit deren Hilfe es möglich ist, den Pipelinedruck innerhalb der erlaubten Grenzen zu halten ("Randbedingungen für die Regelgröße"). Lösen kann man dies mit einer Suchstrategie. Dabei werden die Werte von $F_{S(i+1)}$ gegenüber $F_{S(i)}$ entweder nicht oder um +/-$\Delta F_{Smax}$ verändert, d.h. $\Delta F_{S(i)}$ ist entweder 0, +$\Delta F_{Smax}$ oder -$\Delta F_{Smax}$. Weiterhin wird vorausgesetzt, dass die Änderung in einer Richtung Priorität hat über eine entgegengesetzte Änderung, z. B. die Erhöhung der Produktion hat Priorität über eine Verminderung, da eine Notversorgung teurer ist als ein Abblasen des Produktes. Eine mögliche Suchstrategie lautet dann wie folgt:

1. Berechne den zukünftigen Verlauf des Pipelinedrucks $P_{p(i)}$ so lange, bis der Druck eine Grenze verletzt. Abhängig davon, ob die minimale oder maximale Grenze verletzt wurde, wird $F_S$ zu einem vorhergehenden Zeitpunkt entweder erhöht oder vermindert. Dieser vorhergehende Zeitpunkt wird gesucht.

2. Gehe in der Zeitreihe um k Intervalle zurück, maximal bis zum gegenwärtigen Intervall 0. Die Anzahl der Intervalle k orientiert sich an der Zeitkonstanten eines ALC-Lastwechsels. Die Suche wird jedoch abgebrochen, sobald ein Zeitpunkt erreicht ist, an dem eine weitere Anpassung von $F_{S(i)}$ aufgrund seiner minimalen oder maximalen Begrenzungen nicht möglich ist. In letzteren Fall mache mit Schritt 4 weiter.

3. Falls $\Delta F_{S(i-n)}$ bereits gleich dem gewünschten $\Delta F_S$ ist, so gehe weiter zurück in die Vergangenheit, bis ein $\Delta F_{S(i-n)}$ ungleich dem gewünschten $\Delta F_S$ gefunden wird, maximal bis zum gegenwärtigen Intervall 0.

4. Suche im Intervall (i-k) bis i ausgehend von (i-k) das nächst gelegene $\Delta F_{S(i-1)}$, das ungleich $\Delta F_S$ ist. Falls $\Delta F_S$ das umgekehrte Vorzeichen besitzt wie $\Delta F_{S(i-j)}$ und $\Delta F_{S(i-j)}$ hat Priorität über $\Delta F_S$, so suche weiter.

5. Falls bis zum Zeitpunkt i keine Anpassung von $F_S$ möglich ist, gehe zum nächsten Zeitpunkt und mache weiter mit Schritt 1 (d.h. eine weitere Anpassung der Produktionsrate ist nicht möglich).

6. Ersetze $\Delta F_{S(i-j)}$ durch $\Delta F_S$ und setze i=i-j. Mache weiter mit Schritt 1 unter Berücksichtigung des veränderten i.

7. Wiederhole obige Prozedur bis die vollständige Zeitreihe (i=1 bis n) berechnet ist.

Die Berechnung der vollständigen Zeitreihe für den zukünftigen Produktionsverlauf ("zukünftiger zeitlicher Verlauf der Stellgröße") erfolgt in jedem Zeitschritt neu. Änderungen im prädizierten Verbrauch und Messfehler werden dadurch sofort berücksichtigt. Von der prädizierten Zeitreihe wird nur der erste Wert, d.h. die erforderliche Produktionsänderung für den gegenwärtigen Zeitpunkt, verwendet. Alle zukünftigen Werte der Zeitreihe werden aufgrund der Neuberechnung im nachfolgenden Zeitschritt verworfen.

Durch modifizierte Suchstrategien ist es möglich, die folgenden weiteren Eigenschaften zu erreichen, um Unsicherheiten in den prognostizierten Verbrauchsmengen zu begegnen:

- Um zu vermeiden, dass die Regelgröße dicht an einem Grenzwert belassen wird und um zu erreichen, dass die Regelgröße (bei fehlender Störanregung) auf einen mittleren Sollwert hingeführt wird, ist es möglich, entweder die in der Berechnung verwendeten Grenzen des Pipeline-Drucks zu manipulieren und/oder den Zeitpunkt zu manipulieren, zu dem Änderungen der Stellgröße ausgeführt werden.

- Aufgrund der erlaubten Bandbreite für den Pipeline-Druck besteht innerhalb gewisser Grenzen eine Variationsmöglichkeit bezüglich des Zeitpunkts einer Sollwertänderung. Diese Variationsmöglichkeit kann dazu benutzt werden, um die Priorität von Sollwertänderungen zu steuern. Z. B. ist es im aufgeführten Anwendungsfall sinnvoll, Erhöhungen des Sollwertes möglichst früh und Verminderungen möglichst spät auszuführen, was zu einem Regelverhalten führt, das den Pipeline-Druck möglichst hoch hält.

Anwendungsbeispiel

Figur 1:     Beispiel für eine prädiktive Produktionsmengenregelung gemäß der Erfindung

Figur 2:     Darstellung der Vorhersagen von Mengen und Druck

Figur 3:     Flussdiagramm für den Ablauf der erfindungsgemäßen Suchstrategie in einem konkreten Anwendungsfall

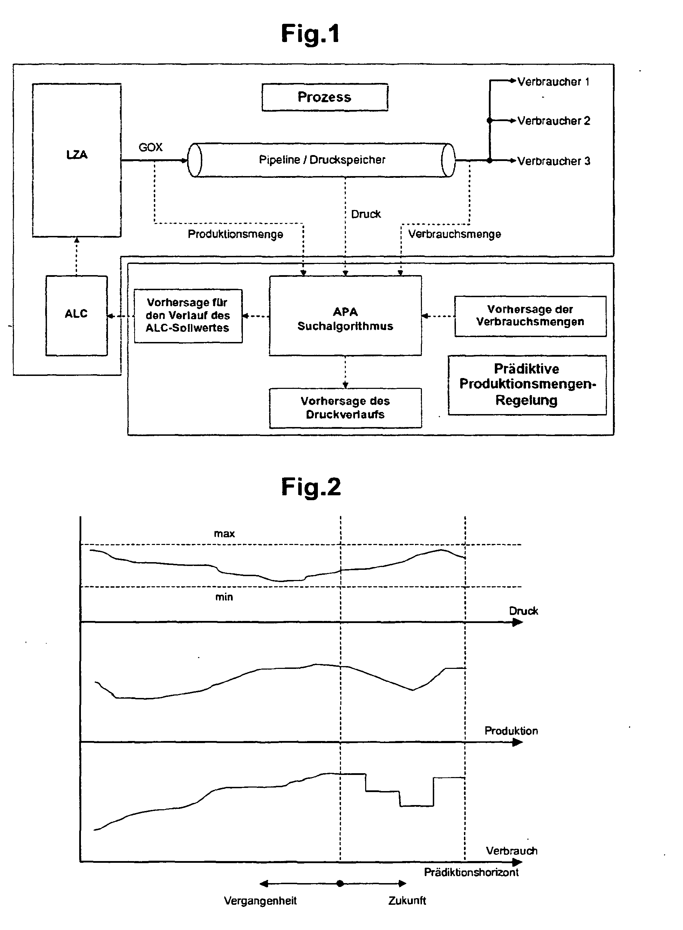

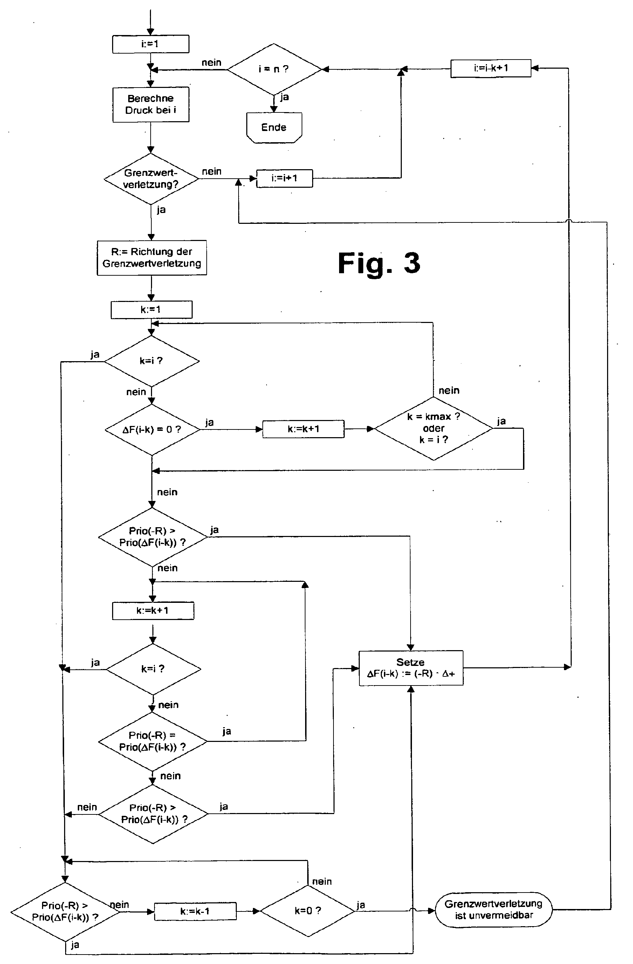

Figur 1 zeigt ein typisches Anwendungsbeispiel für die beschriebene Suchstrategie. Eine Tieftemperatur-Luftzerlegungsanlage (LZA) liefert das Produkt GOX (Gaseous Oxygen) in ein Pipelinenetz. Die Luftzerlegungsanlage wird von einem Automatisierungssystem für Lastwechsel (ALC - Automatic Load Change) geführt. An relevanten Messgrößen stehen die Produktionsmenge der LZA sowie der Druck im Pipelinenetz zur Verfügung. Wenn möglich, sollte noch eine weitere Größe, die gemessene Verbrauchsmenge, verwendet werden. Steht keine Messung für die Verbrauchsmenge zur Verfügung, so wird diese mit der oben angegebenen Gleichung für den Messfehler $F_{err}$ geschätzt. (In der Schätzgleichung für den Messfehler wird der gemessene Gesamtverbrauch $F_{Og}$ dann entweder auf NULL gesetzt oder durch einen geschätzten Gesamtverbrauch ersetzt).
Die prädiktive Produktionsmengenregelung basiert auf dem beschriebenen Suchalgorithmus, im Folgenden genannt APA (Automatic Product Adaptation). Der Suchalgorithmus beinhaltet als Prozessmodell das Modell des Druckspeichers bzw. der Pipeline ("zweites Modell"), sowie, wie das Verhalten des von ALC geführten Luftzerlegers ("erstes Modell"). Damit ist aus der Sicht von APA der ALC-geführte Luftzerleger ein Teil des zu regelnden Prozesses.
Eingangsgrößen für APA sind der Pipelinedruck und die aktuelle Produktionsmenge. Weiterhin wird, z. B. vom Anlagenfahrer, eine Vorhersage der Verbrauchsmengen zur Verfügung gestellt. Basierend auf diesen Daten errechnet APA einen gewünschten zukünftigen Verlauf des ALC-Sollwertes. Ein Nebenprodukt dieser Berechnung ist die Vorhersage des Druckverlaufs in der Pipeline unter den Voraussetzungen, dass die vorausgesagten Verbrauchsmengen eingehalten werden und der Luftzerleger den ALC-Sollwerten folgt.
In jedem Zeitschritt, z. B. alle 15 Sekunden, berechnet APA die Vorhersage neu. Der aktuelle Pipeline-Druck und Änderungen in der Vorhersage der Verbrauchsmengen gehen in die Neuberechnung ein und sorgen so für eine unmittelbare Korrektur der Vorhersagen.
Die vorhergesagten Verläufe von Verbrauchsmengen, ALC-Sollwert und Pipelinedruck sind wertvolle Informationen für den Anlagenfahrer und werden für den Anlagenfahrer als Trendkurve dargestellt (Figur 2).
Das Flussdiagramm von Figur 3 zeigt den Ablauf der Suchstrategie in einem speziellen Anwendungsfall mit den folgenden konkreten Parametern:

- Aufteilung des Prädiktionshorizonts in n äquidistante Zeitschritte
- Drei diskrete Änderungsmöglichkeiten 0, $\Delta+$, $\Delta-$, wobei $\Delta- = -\Delta+$
- ... mit den Prioritätswerten:

$$\text{Prio}(0) = 0$$

$$\text{Prio}(\Delta-) = \text{Prio}(-1) = 1$$

$$\text{Prio}(\Delta+) = \text{Prio}(1) = 2$$

- Vektor $\Delta F(i)$ mit $i = 1, \ldots, n$ für die Werte der Änderungen der Stellgröße in den Zeitpunkten mit dem entsprechenden Index

Die Komponenten des Stellgrößen-Vektors $\Delta F(i)$ werden zunächst grundsätzlich beliebig vorbesetzt, beispielsweise ausschließlich mit dem Wert 0. Anschließend wird vom gegenärtigen Zeitpunkt aus schrittweise in die Zukunft die Regelgröße (Druck) auf der Grundlage des aktuellen Stellgrößen-Vektors, des aktuell bekannten Störgrößen-Verlaufs und des physikallisch-mathematiken Modells berechnet.

Beginnend mit i = 1 wird für jeden Index i < n geprüft, ob die Regelgröße einen der vorgegebenen Grenzwerte verletzt und die Richtung R der Grenzwertverletzung festgestellt:

R = 1, wenn der obere Grenzwert verletzt wird
R = -1, wenn der untere Grenzwert verletzt wird

Die gewünschte Änderungsrichtung -R ist der Richtung R der Grenzwertverletzung entgegengesetzt.

Tritt eine Grenzwertverletzung auf, wird in der Zeitreihe zurückgegangen, bis ein Wert $\Delta F(i-k)$ gefunden wird, der ungleich Null ist, oder bis der Zeitpunkt 0 (k=i) oder ein vorgegebener Maximalwert kmax für die Anzahl der Rückschritte erreicht ist. In dem gefundenen Zeitpunkt (i-k) werden nun die Prioritätswerte berücksichtigt.

Falls der Prioritätswert Prio(-R) der gewünschten Änderungsrichtung größer als der Prioritätswert Prio($\Delta F(i-k)$) des aktuell berechneten Werts der Stellgröße ist, wird diese Komponente des Stellgrößen-Vektors entsprechend geändert und i hochgezählt.

Ist dies nicht der Fall, wird wieder nach vorne in die Zukunft vorangegangen und dort ein $\Delta F(i-k)$ gesucht, dessen Priorität kleiner als die der gewünschten Änderung -R ist, und dort die entsprechende Änderung vorgenommen. Bleibt auch diese Suche erfolglos, ist die Grenzwertverletzung an dieser Stelle unter den vorgegebenen Randbedingungen unvermeidbar und die Berechnung schreitet mit dem nächsthöheren Wert für i weiter, ohne das der Stellgrößen-Vektor modifiziert worden wäre.

Wird i = n erreicht, ist die Berechnung des zukünftigen zeitlichen Verlaufs von Stellund Regelgröße für den gegenwärtigen Zeitpunkt beendet und der erste Wert $\Delta F(1)$ des berechneten Stellgrößen-Vektors wird der physikalischen Regelung vorgegeben. Der Wert $\Delta F(1)$ wird als digitales oder analoges Signal ausgegeben beziehungsweise in dem technischen System eingestellt.

**Patentansprüche**

1. Verfahren zur Regelung eines technischen Systems, das mindestens je

   - eine Stellgröße,
   - eine Regelgröße und
   - eine Störgröße, die von außerhalb des Systems auf die Regelgröße einwirkt, aufweist, wobei
   - ein erstes physikalisch-mathematisches Modell, welches die Beziehung zwischen Stell- und Regelgröße beschreibt,
   - ein zweites physikalisch-mathematisches Modell, welches die Beziehung zwischen Stör- und Regelgröße beschreibt,
   - eine Vorhersage für den zukünftigen zeitlichen Verlauf der Störgröße zwischen dem gegenwärtigen Zeitpunkt $t_o$ und einem Prädiktionszeitpunkt $t_n$,
   **gekennzeichnet durch**
   - ein Satz von Randbedingungen für die Stellgröße und/oder für die Regelgröße
   - eine endliche Anzahl von vorgegebenen diskreten Änderungsmöglichkeiten für die Stellgröße,
   vorliegen, wobei
   - alle Änderungsmöglichkeiten untereinander verschiedene Prioritätswerte aufweisen,
   wobei bei dem Verfahren
   - mittels einer Suchstrategie ein zukünftiger zeitlicher Verlauf von Stell- und Regelgröße zwischen dem gegenwärtigen Zeitpunkt $t_o$ und dem Prädiktionszeitpunkt $t_n$ ermittelt wird, der den Randbedingungen genügt und von den vorgegebenen Änderungsmöglichkeiten der Stellgröße unter Berücksichtigung ihrer Prioritätswerte Gebrauch macht und
   - ein Signal ausgegeben wird, das der im Rahmen der Suchstrategie ermittelten Änderung der Stellgröße zum gegenwärtigen Zeitpunkt $t_o$ entspricht.

2. Verfahren nach Anspruch 1, bei dem die Regelgröße des technischen Systems gemäß dem ausgegebenen Signal eingestellt wird.

3. Verfahren nach Anspruch 1 oder 2, bei dem mindestens eine Notmaßnahme für den Fall vorgesehen ist, dass alleine durch die Änderung der Regelgröße im Rahmen der vorgegebenen Änderungsmöglichkeiten die Einhaltung der Randbedingungen nicht möglich ist, wobei bei der Suckstrategie auch der zukünftige Bedarf an Notmaßnahmen zwischen dem gegenwärtigen Zeitpunkt $t_o$ und dem Prädiktionszeitpunkt $t_n$ ermittelt, das Bedienpersonal darüber informiert und/oder gegebenenfalls ein Signal zur Aktivierung der Notmaßnahme ausgegeben wird.

4. Verfahren nach einem der Ansprüche 1 bis 3, dass für jeden neuen Echtzeitpunkt t0' die Suchstrategie auf der Basis einer gegebenenfalls aktualisierten Vorhersage für den zukünftigen zeitlichen Verlauf der Störgröße und/oder auf der Basis der aktuell gemessenen Werte für Stell- und/oder Regelgröße neu durchgeführt wird.

5. Verfahren nach einem der Ansprüche 1 bis 4, bei dem das Intervall zwischen dem gegenwärtigen Zeitpunkt $t_0$ und dem Prädiktionszeitpunkt $t_n$ in diskrete, insbesondere äquidistante, Zeitschritte $[t_0, t_1]$, $[t_1, t_2]$ bis $[t_{n-1}, t_n]$ unterteilt wird und bei der Suchstrategie für jeden Zwischenzeitpunkt $t_i$ ($i = 1, ..., n$) ein Wert für die Regelgröße und/oder die Stellgröße ermittelt wird.

6. Verfahren nach Anspruch 5, bei dem das technische System ein Zeitverhalten zwischen der Änderung der Stellgröße und der Auswirkung auf die Regelgröße aufweist und dieses Zeitverhalten durch ein Prozessmodell in der Suchstrategie berücksichtigt wird.

7. Verfahren zur Gaszerlegung, insbesondere zur Tieftemperaturzerlegung von Luft, bei dem mindestens ein Produktfluid erzeugt wird und das durch ein Regelverfahren gemäß einem der Ansprüche 1 bis 6 gesteuert wird, wobei die Stellgröße mindestens teilweise durch die Menge an erzeugtem Produktfluid gebildet wird.

8. Verfahren nach Anspruch 7, bei dem die Störgröße mindestens teilweise durch Schwankungen im Verbrauch des erzeugten Produktfluids gebildet wird.

9. Verfahren nach Anspruch 7 oder 8, **dadurch gekennzeichnet, dass** die Regelgröße mindestens teilweise durch den Druck in einem Reservoir des erzeugten Produktfluids gebildet wird.

10. Vorrichtung zur Regelung eines technischen Systems gemäß dem Verfahren nach einem der Ansprüche 1 bis 9 mit Messeinrichtungen für die Stellgröße und/oder die Regelgröße, mit einer analogen oder digitalen Recheneinrichtung, in der die Suchstrategie implementiert ist, und mit einer Ausgabeeinrichtung zur Ausgabe des Signals, das der Änderung der Stellgröße zum gegenwärtigen Zeitpunkt $t_0$ entspricht.

**Claims**

1. Method for control of a technical system, which has:

   - at least one manipulated variable,
   - at least one controlled variable and
   - at least one disturbance variable, which acts on
   the controlled variable from outside the system, there being
   - a first physical-mathematical model, which describes the relationship between manipulated variable and controlled variable,
   - a second physical-mathematical model, which describes the relationship between the disturbance variable and controlled variable, and
   - a prediction for the future time course of the disturbance variable between the present time to and a prediction time $t_n$,
   **characterized in that** there are
   - a set of boundary conditions for the manipulated variable and/or for the controlled variable and
   - a finite number of predefined discrete possible changes for the manipulated variable,
   - all the possible changes having priority values that differ from one another,
   and **in that** in the method
   - by means of a search strategy, a future time course of manipulated variable and controlled variable between the present time to and the prediction time $t_n$ is determined which satisfies the boundary conditions and makes use of the predefined possible changes of the manipulated variable while taking account of their priority values, and
   - a signal is output which corresponds to the change, determined within the context of the search strategy, to the manipulated variable at the present time to.

**2.** Method according to Claim 1, in which the controlled variable of the technical system is set in accordance with the signal that is output.

**3.** Method according to Claim 1 or 2, in which at least one emergency measure is provided for the case in which maintaining the boundary conditions is not possible merely by changing the controlled variable within the context of the predefined possible changes, the future requirement for emergency measures between - the present time to and the prediction time $t_n$ also being determined in the search strategy, the operating personnel being informed about this and/or, if appropriate, a signal being output in order to activate the emergency measure.

**4.** Method according to one of Claims 1 to 3,
**characterized in that**, for each new point to, in real time, the search strategy is carried out again on the basis of a prediction, updated if appropriate, for the future time course of the disturbance variable and/or on the basis of the currently measured values for manipulated variable and/or control variable.

**5.** Method according to one of Claims 1 to 4, in which the interval between the present time to and the prediction time $t_n$ is subdivided into discrete, in particular equidistant, time steps $[t_0, t_1]$, $[t_1, t_2]$ to $[t_{n-1}, t_n]$ and, in the search strategy for each intermediate time $t_i$ (i = 1, ..., n), a value for the controlled variable and/or the manipulated variable is determined.

**6.** Method according to Claim 5, in which the technical system has a time response between the change in the manipulated variable and the effect on the controlled variable, and this time response is taken into account by a process model in the search strategy.

**7.** Method for gas separation, in particular for the lower-temperature separation of air, in which at least one product fluid is produced and which is controlled by a control method according to one of Claims 1 to 6, the manipulated variable being at least partly formed by the volume of product fluid produced.

**8.** Method according to Claim 7, in which the disturbance variable is at least partly formed by fluctuations in the consumption of the product fluid produced.

**9.** Method according to Claim 7 or 8, **characterized in that** the Controlled variable is at least partly formed by the pressure in a reservoir of the product fluid produced.

**10.** Apparatus for controlling a technical system in accordance with the method according to one of Claims 1 to 9, having measuring devices for the manipulated variable and/or the controlled variable, having an analogue or digital computing device, in which the search strategy is implemented, and having an output device for outputting the signal which corresponds to the change to the manipulated variable at the present time $t_0$.

**Revendications**

**1.** Procédé de régulation d'un système technique, qui présente au moins :

une grandeur de commande,
une grandeur de régulation et
une grandeur perturbatrice qui agit depuis l'extérieur du système sur la grandeur de régulation, avec
un premier modèle physico-mathématique qui décrit la relation entre la grandeur de commande et la grandeur de régulation,
un deuxième modèle physico-mathématique qui décrit la relation entre la grandeur perturbatrice et la grandeur de régulation et
une prédiction de l'évolution temporelle future de la grandeur perturbatrice entre l'instant présent $t_0$ et un instant de prédiction $t_n$,

**caractérisé en ce que**
il existe un ensemble de conditions aux limites sur :

la grandeur de commande et/ou sur la grandeur de régulation et
un nombre fini de possibilités distinctes prédéterminées de modification de la grandeur de régulation,

toutes les possibilités de modification présentant des valeurs de priorité différentes les unes des autres et **en ce que** dans le procédé :

au moyen d'une stratégie de recherche, on détermine l'évolution temporelle future de la grandeur de commande et de la grandeur de régulation entre l'instant présent $t_0$ et l'instant de prédiction $t_n$ qui satisfait aux conditions aux limites et qui recourt aux possibilités prédéterminées de modification de la grandeur de commande et en tenant compte de leur valeur de priorité et

un signal qui correspond à la modification de la grandeur de commande à l'instant présent $t_0$ déterminée dans le cadre de la stratégie de recherche est émis.

2. Procédé selon la revendication 1, dans lequel la grandeur de régulation du système technique est réglée en fonction du signal émis.

3. Procédé selon les revendications 1 ou 2, dans lequel au moins une mesure d'urgence est prévue pour le cas où le respect des conditions aux limites n'est pas possible lorsque la grandeur de commande est modifiée uniquement dans le cadre des possibilités de modification prédéterminées et dans lequel les besoins futurs en mesures d'urgence entre l'instant présent $t_0$ et l'instant de prédiction $t_n$, sont également déterminés dans la stratégie de recherche, le personnel de service en est informé et/ou un signal d'activation de la mesure d'urgence est éventuellement émis.

4. Procédé selon l'une des revendications 1 à 3, **caractérisé en ce qu'**à chaque nouvel instant réel t0', on exécute de nouveau la stratégie de recherche sur base d'une prédiction éventuellement actualisée de l'évolution temporelle future de la grandeur perturbatrice et/ou sur base des valeurs mesurées à cet instant de la grandeur de commande et/ou de la grandeur de régulation.

5. Procédé selon l'une des revendications 1 à 4, dans lequel l'intervalle entre l'instant présent $t_0$ et l'instant de prédiction $t_n$ est divisé en intervalles temporels $[t_0, t_1]$, $[t_1, t_2]$ à $[t_{n-1}, t_n]$ distincts et en particulier équidistants et en ce que lors de la stratégie de recherche, on détermine pour chaque instant intermédiaire $t_i$ (i = 1, ..., n) une valeur de la grandeur de régulation et/ou de la grandeur de commande .

6. Procédé selon la revendication 5, dans lequel le système technique présente un comportement temporel entre la modification de la grandeur de commande et son effet sur la grandeur de régulation, ce comportement temporel étant pris en compte par un modèle du processus dans la stratégie de recherche.

7. Procédé de décomposition de mélanges de gaz, en particulier de décomposition de l'air à basse température, dans lequel on forme au moins un fluide de produit et qui est commandé par un procédé de régulation selon l'une des revendications 1 à 6, la grandeur de commande étant formée au moins en partie par le débit de fluide de produit ainsi formé.

8. Procédé selon la revendication 7, dans lequel la grandeur perturbatrice est formée au moins en partie par des variations de la consommation du fluide de produit formé.

9. Procédé selon les revendications 7 ou 8, **caractérisé en ce que** la grandeur de régulation est formée au moins en partie par la pression qui règne dans un réservoir de fluide de produit formé.

10. Dispositif de régulation d'un système technique à l'aide du procédé selon l'une des revendications 1 à 9, et qui présente des dispositifs de mesure de la grandeur de commande et/ou de la grandeur de régulation, un dispositif analogique ou numérique de calcul dans lequel la stratégie de recherche est installée et un dispositif de sortie qui émet le signal qui correspond à la modification de la grandeur de commande à l'instant présent $t_0$.

# Fig.1

| | | Prozess | | Verbraucher 1 |
|---|---|---|---|---|

LZA — GOX → Pipeline / Druckspeicher → Verbraucher 2, Verbraucher 3

Druck
Produktionsmenge
Verbrauchsmenge

ALC ← Vorhersage für den Verlauf des ALC-Sollwertes ← APA Suchalgorithmus ← Vorhersage der Verbrauchsmengen

Vorhersage des Druckverlaufs

Prädiktive Produktionsmengen-Regelung

# Fig.2

max

min

Druck

Produktion

Verbrauch

Prädiktionshorizont

Vergangenheit          Zukunft

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6056781 A